# FASCICULE DE BREVET EUROPEEN

(11) **EP 1 034 731 B1**
(45) Date de publication et mention de la délivrance du brevet: **26.11.2003**
(21) Numéro de dépôt: 00400661.5
(22) Date de dépôt: 10.03.2000
(51) Int. Cl.: A47J 43/07

(54) **Couteau rotatif**
Rotierendes Messer
Rotary knife

(30) Priorité: 10.03.1999 FR 9902941
(43) Date de publication de la demande: 13.09.2000
(73) Titulaire: Robot-Coupe S.N.C., 94300 Vincennes (FR)
(72) Inventeur: Perrin, Pierre, 71410 Sanvignes (FR)
(74) Mandataire: Viard, Jean

(56) Documents cités:
- CH-A- 470 240
- DE-C- 19 502 216
- DE-U- 29 612 865
- US-A- 3 156 278
- US-A- 4 173 310

## Description

La présente invention a pour objet un couteau rotatif destiné en particulier, mais non exclusivement, aux appareils de traitement des aliments pour la restauration collective, voir par exemple CH-A-470 240.

Ces appareils bien connus dans le domaine, appelés "cutters" ou coupeurs-mélangeur, comprennent, en autre, une cuve de forme de révolution (cylindrique ou tronconique), d'une capacité variant de quelques litres à quelques dizaines de litres et à l'intérieur de laquelle sont introduits les divers ingrédients, un moteur électrique dont l'arbre d'entraînement fait saillie verticalement et passe à travers une ouverture centrale pratiquée dans le fond de la cuve ainsi qu'un outil tournant monté sur cet arbre. Les couteaux de ces appareils assurent le traitement de la préparation à effectuer (hacher, couper, émulsionner, mixer, pétrir, mélanger, etc.).

Dans FR-A-2 147 361 (VERDUN), est décrit un couteau rotatif comprenant deux lames en forme de croissant fixées sur un moyeu qui est assujetti sur l'arbre d'un moteur. Ces lames s'étendent dans des directions opposées, parallèlement l'une à l'autre, le moyeu étant surmoulé sur les lames. Les lames en forme de croissant s'étendent dans des directions opposées, parallèlement l'une à l'autre et espacées verticalement de quelques centimètres s'équilibrent mutuellement. On connaît également des couteaux auto équilibrés, constitués de deux lames symétriques, formant un « S » dans un même plan.

Lorsque la capacité des machines est de l'ordre de six litres environ, le couteau est généralement constitué d'un ensemble de lames démontables permettant à l'utilisateur d'adapter le nombre de lames (2 ou 3) ainsi que l'espacement vertical entre chacune d'elles au type de travail à effectuer.

Ce dispositif fonctionne bien pour les cuves de capacités inférieures à 20 litres environ mais les dimensions relatives des divers éléments mobiles pour des cuves de capacités supérieures induisent des niveaux de vibrations préjudiciables.

Un premier objet de l'invention est d'apporter une solution pratique au problème d'équilibrage de l'ensemble tournant tout en conservant les qualités des systèmes utilisés à ce jour.

Selon l'invention, le couteau rotatif destiné à être monté sur un axe comprenant au moins une lame s'étendant d'un seul côté de l'axe est caractérisé en ce que, à l'opposé de la lame par rapport à l'axe de montage, est disposée une masselotte d'équilibrage, de sorte que le centre d'inertie soit ramené sur l'axe de montage.

Ainsi, le couteau rotatif est équipé de lames équilibrées individuellement. Chaque lame, composée d'une partie coupante courbe disposée à l'avant de la pièce dans le sens de rotation et d'une zone centrale permettant l'entraînement de celle-ci, est complétée par une masse d'équilibrage assurant un équilibrage parfait de chaque ensemble lame-masselotte.

L'obtention de ces pièces par une technique produisant des pièces monobloc (procédé de fonderie de précision, par exemple) permet d'ajouter au nombre des avantages de l'invention celui d'une simplicité d'utilisation et d'une hygiène renforcée.

Selon une autre caractéristique de l'invention, le couteau, en acier inoxydable est moulé. Bien entendu, la masselotte est plus haute que la lame du couteau et contribue à dégager le moyeu de l'outil au cours du travail. Or, c'est à ce niveau que la vitesse tangentielle est la plus réduite.

L'utilisation de l'ensemble monobloc, évite toute erreur de montage ou de manipulation de la partie active de la lame et de son système d'équilibrage d'une part, et, d'autre part, induit une absence d'interstice entre ces deux parties. Cet avantage se concrétise dans le domaine de la restauration par une hygiène parfaite puisque les zones de rétention sont nulles.

L'utilisation de lames monobloc auto équilibrées permet par ailleurs, de disposer d'un ensemble couteau équilibré indépendamment du nombre de lames utilisées et de leurs positions respectives. Ainsi, l'utilisation d'un couteau incluant deux ou trois lames permet de travailler dans des conditions améliorées (absence de vibrations malgré les masses traitées). L'utilisation de couteaux incluant trois lames largement espacées permet d'augmenter les capacités maximales traitées sans avoir besoin d'un système additionnel (bras mélangeur, par exemple) tout en gardant un niveau de qualité optimal.

Un autre avantage de ces dispositions est d'assurer, en plus de l'ergonomie de travail accrue, une sécurité renforcée pour l'utilisateur. L'équilibrage intrinsèque des lames permet de pallier une éventuelle erreur de mise en position d'une ou de plusieurs lames. Cet aspect de la sécurité de l'utilisateur est également renforcé par l'absence de vibrations qui améliore le vieillissement de l'ensemble de la machine et donc qui augmente la durée de vie des composants mécaniques les plus sollicités.

Selon une autre caractéristique de l'invention, le dessous du couteau est plat. Il est ainsi possible de procéder à son affûtage à plat. La lame présente en son centre, une ouverture de montage sur le moyeu qui est, de préférence, polygonale et, par exemple hexagonale. Dans ce cas, les lames peuvent être montées selon six directions différentes.

D'autres caractéristiques et avantages de l'invention apparaîtront au cours de la description qui va suivre d'un mode particulier de réalisation, donné uniquement à titre d'exemple non limitatif, en regard des dessins qui représentent :
- la figure 1, une vue en perspective d'une lame de couteau selon l'invention;
- la figure 2, une vue en perspective d'un couteau comportant trois lames.

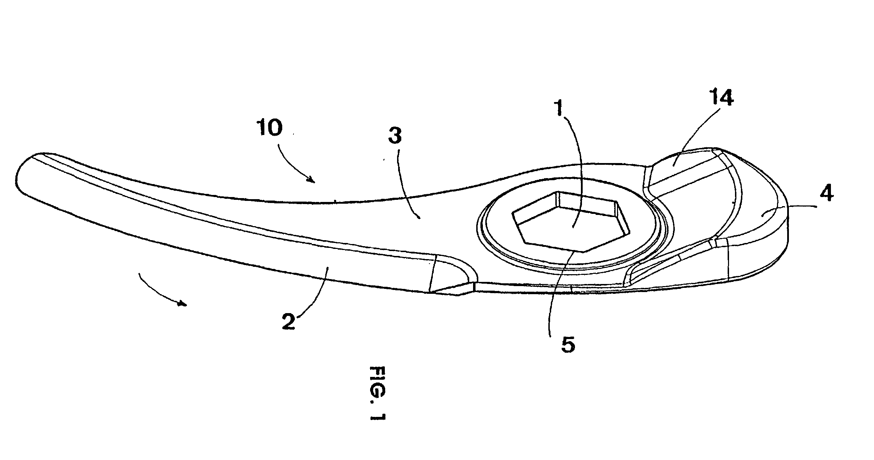

Sur les figures, les mêmes références désignent les mêmes éléments. Sur la figure 1, la lame de couteau comprend un axe de rotation 1 qui dans l'exemple représenté est au centre de l'ouverture 5 de la lame désignée de manière générale par la référence 10. A partir du centre 1 et, sur la gauche de la figure s'étend la lame proprement dite 3 qui présente une partie avant coupante 2 formant un angle par rapport au plan supérieur de la lame 3. A l'opposé de la lame 3 se trouve une masselotte 4 destinée à équilibrer la lame 3 et à ramener le centre de gravité 1 de l'ensemble sur l'axe de rotation de la lame 10. De ce fait la lame 10 est auto équilibrée. Afin de dégager suffisamment le partie arrière de la lame 10 pour que cette partie ne nuise pas à l'utilisation, la masselotte est concentrée près du centre de gravité 1 de l'ensemble. Cela implique que la masselotte est plus épaisse que la lame 3. Elle affleure la surface supérieure de la lame 3 par une surface inclinée 14. La surface active inférieure de la lame 3 est plane de telle sorte que son affûtage puisse se faire à plat.

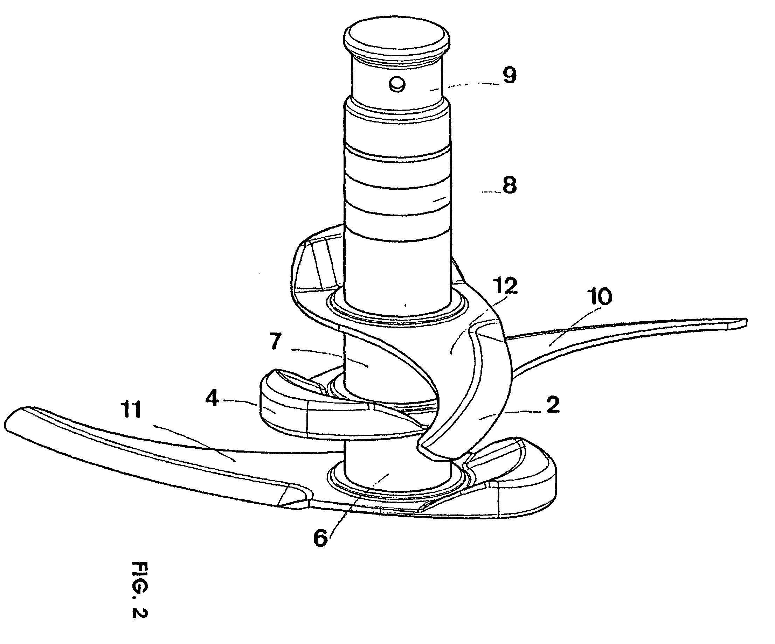

La figure 2 représente en perspective un couteau utilisant des lames selon l'invention. Dans l'exemple représenté, ces lames sont au nombre de trois, portant les références 11, 10 et 12 du bas vers le haut. La lame 11 est une lame « fond de cuve », c'est à dire qu'elle peut, suivant le montage du couteau, se trouver à une très faible distance du fond de la cuve (non représentée), comme décrit dans FR-A-2 147 361. La lame 11 est surmontée par une bague d'écartement ou entretoise 6 de la lame 10 qui est disposée à un niveau supérieur, sur le moyeu dont la section horizontale correspond à l'ouverture 5 de chaque lame. Les lames 11 et 10 sont décalées angulairement de 120° (cas d'un couteau 3 lames) ou de 180° pour un couteau 2 lames. Une troisième lame 12 est montée sur le moyeu au dessus de la seconde en formant à nouveau un angle de 120° avec celle-ci. Ces deux lames sont espacées à l'aide d'une entretoise 7. Un ensemble d'entretoises 8 est disposé au dessus de la lame 12 au dessous d'un écrou 9. L'écrou 9 vissé sur le moyeu permet de solidariser l'ensemble couteau permettant ainsi une manipulation aisée de ce dernier. Les entretoises 6,7,8 permettent d'espacer les lames à volonté. Une fois le couteau disposé dans la cuve, l'arbre moteur se trouve à l'intérieur du moyeu et les sections horizontales de ces pièces permettent l'entraînement du couteau par le moteur.

La forme particulière de l'ouverture 5 de la lame et du moyeu (ici hexagonale) permet un montage des lames dans six directions. Ainsi, en fonction du travail à effectuer, en particulier de la consistance des produits, de la quantité à travailler et du type d'opération réalisée (mixage, mélange, etc.), il est possible de conformer le couteau avec le nombre de lames approprié, dans les directions appropriées, puis de changer cette disposition en dévissant l'écrou 9 et en montant les lames et les entretoises selon une configuration nouvelle.

Il va de soi que de nombreuses variantes peuvent être apportées, notamment par substitution de moyens techniques équivalents, sans sortir pour cela du cadre de l'invention.

## Revendications

1. Couteau rotatif, destiné à être monté sur un axe, comprenant au moins une lame (3) s'étendant d'un seul côté de l'axe, **caractérisé en ce que**, à l'opposé de chaque lame (3) par rapport à l'axe de montage (1), est disposée une masselotte d'équilibrage (4), de sorte que le centre de gravité de l'ensemble soit ramené sur l'axe (1) de montage.

2. Couteau rotatif selon la revendication 1, **caractérisé en ce que** l'ensemble lame-masselotte (3,4) est monobloc et en acier inoxydable moulé.

3. Couteau rotatif selon la revendication 1, **caractérisé en ce que** sur le moyeu sont montées plusieurs lames (10,11,12) espacées par des entretoises (6,7,8).

4. Couteau rotatif selon la revendication 1, **caractérisé en ce que** les lames (10,11,12) présentent des orientations et des espacements différents et réglables.

5. Couteau rotatif selon la revendication 1, **caractérisé en ce que** chaque ensemble lame-masselotte (3,4) présente en son centre, une ouverture (5) de fixation sur un moyeu.

6. Couteau rotatif selon la revendication 5, **caractérisé en ce que** l'ouverture (5) en son centre est polygonale.

7. Couteau rotatif selon la revendication 5, **caractérisé en ce que** la partie coupante (2) de la lame est convexe et **en ce que** la surface active inférieure de la lame (3) est plane.

## Claims

1. Rotary knife provided to be mounted onto an axis, comprising at least one blade (3) extending on a single side of the axis, **characterized in that**, at the opposite of each blade (3) with respect to the mounting axis (1), there is arranged a small balancing weight (4), whereby the assembly centroid is brought back onto the mounting axis (1).

2. Rotary knife according to claim 1, **characterized in that** the blade-small mass assembly (3,4) is a single unit of a moulded stainless steel.

3. Rotary knife according to claim 1, **characterized in that** a plurality of blades (10, 11, 12) are mounted on the hub while being spaced by distance members (6, 7, 8).

4. Rotary knife according to claim 1, **characterized in that** the blades (10, 11, 12) have orientations and spacings that are different and adjustable.

5. Rotary knife according to claim 1, **characterized in that** each blade-small mass assembly (3, 4) has, in its center, an opening (5) for fixation on a hub.

6. Rotary knife according to claim 5, **characterized in that** the opening (5) in its center is polygonal.

7. Rotary knife according to claim 5, **characterized in that** the cutting part (2) of the blade is convex and **in that** the lower active surface of the blade (3) is flat.

## Patentansprüche

1. Rotierendes Messer, zur Befestigung an einem Bolzen vorgesehen, mit mindestens einer sich auf einer einzigen Seite des Bolzens erstreckenden Schneide (3), **dadurch gekennzeichnet, dass** entgegengesetzt jeder Schneide (3), in bezug auf den Befestigungsbolzen (1), ein Ausgleichsgewicht (4) angeordnet ist, so dass der Schwerpunkt der Gesamtheit auf den Befestigungsbolzen (1) zurückgeführt wird.

2. Rotierendes Messer gemäss Anspruch 1, **dadurch gekennzeichnet, dass** die aus Schneide und Ausgleichsgewicht bestehende Einheit (3, 4) in Einblockkonstruktion und aus gegossenem nicht rostendem Stahl hergestellt ist.

3. Rotierendes Messer gemäss Anspruch 1, **dadurch gekennzeichnet, dass** auf die Nabe mehrere durch Querstege (6, 7, 8) getrennte Schneiden (10, 11, 12) montiert sind.

4. Rotierendes Messer gemäss Anspruch 1, **dadurch gekennzeichnet, dass** die Schneiden (10, 11, 12) unterschiedliche und einstellbare Orientierungen und Abstände aufweisen.

5. Rotierendes Messer gemäss Anspruch 1, **dadurch gekennzeichnet, dass** jede aus Schneide und Ausgleichsgewicht bestehende Einheit (3, 4) in ihrem Zentrum eine Öffnung (5) zur Befestigung auf einer Nabe aufweist.

6. Rotierendes Messer gemäss Anspruch 5, **dadurch gekennzeichnet, dass** die Öffnung (5) in ihrer Mitte polygonal ist.

7. Rotierendes Messer gemäss Anspruch 5, **dadurch gekennzeichnet, dass** der schneidende Teil (2) der Schneide konvex und die innere aktive Oberfläche der Schneide (3) eben ist.
